# EUROPÄISCHE PATENTSCHRIFT

(11) **EP 1 021 022 B1**
(45) Veröffentlichungstag und Bekanntmachung des Hinweises auf die Patenterteilung: **23.02.2005**
(21) Anmeldenummer: 99120473.6
(22) Anmeldetag: 14.10.1999
(51) Int. Cl.: H04L 29/06, H04M 11/00, H04L 12/12, H04M 3/533, H04L 12/58

(54) **Vorrichtung und Verfahren zum Fernzugriff auf einen Zielcomputer**
System and method for remotely accessing a computer
Système et procédé pour accéder à distance à un ordinateur

(30) Priorität: 13.01.1999 DE 19900895; 15.06.1999 DE 29910471 U
(43) Veröffentlichungstag der Anmeldung: 19.07.2000
(73) Patentinhaber: Living Byte Software GmbH, 80935 München (DE)
(72) Erfinder: Kramer, Tobias, 85579 Neubiberg (DE)
(74) Vertreter: Betten & Resch

(56) Entgegenhaltungen:
- EP-A- 0 845 894
- WO-A-00/65774
- US-A- 5 333 152
- US-A- 5 801 689

## Beschreibung

Die Erfindung betrifft eine Vorrichtung und ein Verfahren zum Fernzugriff auf einen Zielcomputer.

Im Stand der Technik ist bekannt, sog. Unified-Messaging-Systeme zu verwenden. Hierbei wird ein Informationsträger wie z.B. ein Telefax, eine Email, etc. an eine spezielle Faxnummer bzw. Email-Adresse eines Unified-Messaging-Providers geschickt. Dort besteht für jeden Kunden eine Art virtuelles Büro. Jedes Fax bzw. jede Email wird auf dem Server des Providers dieses Services gespeichert. Ein solches Fax bzw. eine solche Email kann dann via Internet, mit einem entsprechendem Paßwort von überall abgerufen werden. Der Nachteil dieser Systeme ist, daß jedes Fax bzw. jede Email an die spezielle Faxnummer bzw. Email-Adresse des Providers geschickt werden muß - jedem Kunden muß diese neue Email-Adresse bzw. Faxnummer mitgeteilt werden, obwohl die meisten schon eine Email-Adresse bzw. eine Faxnummer besitzen. Kommt ein Fax an, wird es nicht direkt z.B. im Büro des Kunden empfangen und ausgedruckt, sondern beim Provider des Services. Dort kann es zwar Benachrichtigungs- bzw. Weiterleitungsmöglichkeiten geben. Allerdings ist eine bestimmte Verzögerung meist unumgänglich.

Außerdem benötigt man, wenn man unterwegs ist (beispielsweise auf Geschäftsreise), und den eigenen Computer nicht mit sich führt, häufig nicht nur eingegangene Faxe und Emails, sondern z.B. eine bestimmte Datei, etwa eine Tabelle oder eine Datenbankdatei des eigenen Computers. Deshalb wäre es vorteilhaft, von unterwegs aus so auf den eigenen Computer bzw. dessen Daten zugreifen zu können, als würde man diesen direkt bedienen.

Auch für diese Problematik sind bereits Lösungen bekannt. Sog. RAS (Remote Access Systeme) ermöglichen z.B. von unterwegs aus den kompletten Zugriff auf den eigenen, entfernten Computer mittels z.B. einer Telefonverbindung. Dabei wählt man z.B. mit Hilfe eines mobilen Computers den eigenen, entfernten Computer an und hat somit eine stehende Verbindung zu diesem Computer. Dann kann man wie in einem Netzwerk alle Funktionen des eigenen, entfernten Computers steuern bzw. überwachen. Nachteilig ist dabei zum einen, daß immer eine Telefonverbindung zu dem entfernten Computer bestehen muß. Dies kann z.B. bei einer Telefonverbindung vom Ausland aus nach Deutschland sehr hohe Kosten verursachen. Zum anderen muß auf dem mobilen Computer, von dem aus auf den entfernten Computer zugegriffen werden soll, die entsprechende Software installiert sein. Der mobile Computer muß mit einem Telefon- bzw. Mobilfunknetz verbunden sein. Allerdings steht nicht immer ein entsprechender mobiler Computer mit entsprechender Software zur Verfügung.

EP-0845894 offenbart ein Verfahren zum Fernzugriff auf einen Zielcomputer, wobei ein entfernter Computer eine Internet-Verbindung zu einem zentralen Computer aufbaut und eine Verbindung des zentralen Computers mit dem Zielcomputer in Reaktion auf den Aufbau der Internet-Verbindung ausgelöst wird.

Die vorliegende Erfindung ist in den unabhängigen Ansprüchen definiert.

Vorteilhafte Weiterentwicklungen und Ausgestaltungen der Erfindung werden in den Unteransprüchen beschrieben.

Im Prinzip besteht die Erfindung darin, daß von einem entfernten Computer aus durch einen Benutzer eine Internetverbindung zu einer Vorrichtung, insbesondere einem zentralen Computer aufgebaut wird. Dieser löst in Reaktion auf den Aufbau der Internetverbindung ein Verbinden des zentralen Computers mit einem Zielcomputer aus, und/oder ein Verbinden des entfernten Computers mit dem Zielcomputer. Dabei wird unter dem Begriff "Zielcomputer" allgemein ein Computer verstanden, auf dessen Daten ein Benutzer zugreifen will. Der Zugriff soll jedoch nicht direkt vom Zielcomputer aus erfolgen, sondern von einem anderen, entfernten Computer aus. Dabei kann der Zielcomputer z.B. ein ausschließlich dem Benutzer zugeordneter, "eigener" Computer sein, beispielsweise ein PC oder ein mobiler Computer, z.B. im Büro des Benutzers, bei ihm zu Hause, oder an einem anderen Ort. Der Zielcomputer kann z.B. auch ein "fremder", d.h. nicht ausschließlich dem Benutzer zugeordneter Computer sein, für dessen Daten der Benutzer zumindest teilweise eine Zugriffsberechtigung hat. Beispielsweise kann der Benutzer berechtigt sein, die Daten oder einen Teil der Daten des Zielcomputers zu lesen, aber nicht zu ändern. Die Zugriffsberechtigung kann auch eine Berechtigung zum Ändern der Daten (oder eines Teils der Daten) des Zielcomputers umfassen. Ein derartiger "fremder" Zielcomputer kann z.B. ein PC oder ein mobiler Computer sein, den außer dem Benutzer noch weitere Personen benutzen, oder z.B. ein Server oder Hostrechner, dessen Daten der Benutzer lesen und/oder ändern will. Dies geschieht üblicherweise von einem direkt mit dem Server verbundenen Clientrechner bzw. Terminal im Büro des Benutzers aus. Erfindungsgemäß erfolgt der Zugriff stattdessen vom entfernten Computer aus, und zwar unter Einbeziehung des zentralen Computers.

Der entfernte Computer ist allgemein jeder beliebige, zusätzlich zum Zielcomputer vorhandene Computer. Insbesondere ist der entfernte Computer entfernt von dem Zielcomputer angeordnet, z.B. in einem anderen Raum, einem anderen Gebäude, einer anderen Stadt, einem anderen Land, usw. I.a. ist der entfernte Computer so weit vom Zielcomputer entfernt, daß für den Benutzer, wenn er sich in der Nähe des entfernten Computers aufhält, der indirekte Zugriff über den zentralen Computer bequemer ist als etwa der direkte Zugriff über z.B. die Tastatur, die Maus, etc. des Zielcomputers. Der Zielcomputer befindet sich insbesondere an einem mehr als 100 m, vorteilhaft mehr als 1 km, und ganz besonders bevorzugt mehr als 10 oder 100 km vom entfernten Computer entfernt liegenden Ort. Z.B. kann der entfernte Computer ein vom Benutzer unterwegs, z.B. auf Geschäftsreise, mitgeführter mobiler Computer sein. Der mobile Computer kann auch ein vom Benutzer unterwegs ausgeliehener, mobiler Computer sein. Denkbar ist z.B. auch, daß der entfernte Computer ein PC ist. Alternativ ist z.B. auch möglich, daß der entfernte Computer ein Clientrechner oder ein Terminal ist, welche z.B. mit einem Server bzw. einem Hostrechner verbunden sind.

Der entfernte Computer und der zentrale Computer sind so ausgestaltet, daß vom entfernten Computer aus eine Internetverbindung zu dem zentralen Computer aufgebaut werden kann. Insbesondere kommunizieren der entfernte Computer und der zentrale Computer miteinander unter Verwendung von Internet-Protokollen, insbesondere gemäß dem sog. Transmission Control Protocol (TCP) und dem sog. Internet Protocol (IP), kurz TCP/IP. Hierzu ist auf dem entfernten Computer zur Anbindung an das Internet eine Software geladen, die das TCP/IP-Protokoll verstehen und auswerten kann (Socket oder TCP/IP Stack).

Besonders bevorzugt ist der entfernte Computer ein mit dem World Wide Web verbindbarer Clientrechner: Hierzu ist als Clientsoftware auf dem entfernten Computer ein sog. Web-Browser geladen. Der zentrale Computer ist ein ständig mit dem World Wide Web verbundener Hostrechner (sog. Web-Host). Der Aufbau der Internetverbindung zwischen entferntem und zentralem Computer dient insbesondere dazu, vom entfernten Computer aus über das Internet auf eine Homepage, d.h. eine bestimmte Datei des zentralen Computers zuzugreifen. Dabei wird die Internetverbindung zum zentralen Rechner hergestellt, indem der entfernte Computer zunächst auf übliche Weise mit seinem zugeordneten Web-Host verbunden wird. Auf diesem läuft die der Clientsoftware auf dem entfernten Computer entsprechende Serversoftware. Dann wird am entfernten Computer die zu der Homepage auf dem zentralen Computer gehörende Web-Adresse eingegeben, insbesondere als URL- (Universal Resource Locator-) Adresse. Diese ist üblicherweise wie folgt aufgebaut: Der erste Teil bezeichnet das Internet-Protokoll (Zeichenfolge "http://"). Darauf folgt die Zeichenfolge "www" als Bezeichnung für das World Wide Web. Der dritte Teil der URL-Adresse bezeichnet den zentralen Computer, auf dem die Homepage gespeichert ist. Mit dem vierten Teil wird der Pfad zu dem lokalen Verzeichnis bezeichnet, in dem die Homepage auf dem zentralen Computer gespeichert ist, und der letzte Teil benennt den exakten Dateinamen der Homepage.

Diese der Homepage des zentralen Computers zugeordnete URL-Adresse wird dann vom zum entfernten Computer zugeordneten Web-Host angewählt, d.h. als Anfrage an den zentralen Computer über das Internet verschickt. Dabei wird i.a. der sog. HTTP- (Hypertext Transfer Protocol-) Standard verwendet. Im Internet sorgen dann sog. Internet-Router dafür, daß die Anfrage an den richtigen Web-Host, d.h. hier an den zentralen Computer, weitergeleitet wird. Empfängt dieser die Anfrage, sendet er der Homepage zugeordnete Daten über das Internet zurück an den entfernten Computer. Die Homepage kann dann auf einem dem entfernten Computer zugeordneten Bildschirm dargestellt werden.

Bei der Erfindung wird dann in Reaktion auf den Aufbau der Internetverbindung ein Verbinden des zentralen Computers mit dem Zielcomputer ausgelöst. Hierzu wird vom zentralen Computer zunächst der für die jeweilige Verbindung vorgesehene Zielcomputer ausgewählt. Beispielsweise kann einem bestimmten Benutzer stets ein einziger vorbestimmter, d.h. für eine Vielzahl von Fernzugriffen im Voraus ausgewählter Zielcomputer zugeordnet sein, mit dem der zentrale Computer eine Verbindung herstellen soll. Die Identifizierung des Zielcomputers (unter der Vielzahl von möglichen Zielcomputern) erfolgt dann z.B. dadurch, daß vom Benutzer vom entfernten Computer aus über die Internetverbindung den Benutzer charakterisierende Daten übermittelt werden, z.B. ein benutzerspezifisches Paßwort, die Telefonnummer des Benutzers, etc. Denkbar ist z.B. auch, daß der Benutzer bei jedem Fernzugriff einen anderen Zielcomputer auswählen kann, z.B. einen von mehreren vorbestimmten, dem Benutzer zugeordneten Zielcomputern. Die Identifizierung des Zielcomputers erfolgt dann z.B. dadurch, daß vom Benutzer vom entfernten Computer aus über die Internetverbindung den gewünschten Zielcomputer charakterisierende Daten übermittelt werden, z.B. ein zielcomputerspezifisches Paßwort oder z.B. die Telefonnummer, unter der der Zielcomputer angewählt werden kann, etc. Möglich ist beispielsweise auch die Übermittlung von sowohl benutzer- als auch zielcomputerspezifischen Daten. Diesen Daten ordnet der zentrale Computer dann dem jeweiligen Zielcomputer zu, z.B. mit Hilfe einer im zentralen Computer gespeicherten Tabelle.

An den so bestimmten Zielcomputer sendet der zentrale Computer dann zum Auslösen des Verbindens ein Rufsignal. Dieses kann z.B. über eine Kabel- und/oder eine Funkverbindungen an den Zielcomputer übermittelt werden, insbesondere über eine Telefonleitung. Unter dem Rufsignal wird allgemein jedes beliebige Anforderungssignal an den Zielcomputer verstanden. Vorteilhaft wird dieses Anforderungssignal vom zentralen Computer nicht über das Internet übertragen, d.h. das Rufsignal ist kein Anforderungssignal gemäß dem o.g. Internet-Protokoll TCP/IP. Besonders bevorzugt wird vom zentralen Computer dadurch ein Rufsignal an den Zielcomputer gesendet, daß er die Telefonnummer eines dem Zielcomputer zugeordneten Telefonanschlusses wählt, d.h. die dem Telefonanschluß des Zielcomputers entsprechenden Telefonverbindungs-Wahlzeichen.

Bevorzugt wird der Zielcomputer in Reaktion auf das Rufsignal eingeschaltet. Der Zielcomputer ist also zunächst von der Stromversorgung getrennt, und wird erst nach dem Empfang des Rufsignals mit der Stromversorgung verbunden. Denkbar ist auch, daß der Zielcomputer zunächst in einem Bereitschafts-Modus ist (Standby-Betrieb), bei dem er nur wenig Strom verbraucht. Erst nach dem Empfang des Rufsignals wird er in einen Arbeitsmodus gebracht, bei welchem der Stromverbrauch höher ist.

Es ist weiterhin von Vorteil, wenn der Zielcomputer in Reaktion auf das Rufsignal die Verbindung zum zentralen Computer herstellt. Wie oben erläutert wurde, kann der zentrale Computer z.B. dadurch ein Rufsignal an den Zielcomputer senden, daß er die Telefonnummer des dem Zielcomputer zugeordneten Telefonanschlusses wählt. Eine Verbindung zwischen dem Zielcomputer und dem zentralen Computer kann dann z.B. dadurch erreicht werden, daß der Zielcomputer das entsprechende Telefonverbindungs-Beginnzeichen übermittelt, d.h. dadurch, daß beim Zielcomputer ein dem Abheben beim Fernsprechgerät entsprechender Vorgang stattfindet.

Auch ist es vorteilhaft möglich, daß der Zielcomputer in Reaktion auf das Rufsignal, z.B. das o.g. vom zentralen Computer gesendete Telefonverbindungs-Wahlzeichen, oder ein beliebiges andersartiges Anforderungssignal, eine Internetverbindung mit dem zentralen Computer (und/oder dem entfernten Computer) herstellt. Der Zielcomputer ist dabei bevorzugt ein mit dem World Wide Web verbindbarer Clientrechner. Der Zielcomputer ist zunächst vom Internet insgesamt getrennt. Erst in Reaktion auf den Empfang des Rufsignals wird der Zielcomputer ggf. zunächst eingeschaltet bzw. in den Arbeitsmodus gebracht, und dann mit dem Internet verbunden. Hierzu wird der Zielcomputer auf übliche Weise mit seinem zugeordneten Web-Host verbunden. Auf diesem läuft die der Clientsoftware auf dem Zielcomputer entsprechende Serversoftware. Hierauf wird vom Zielcomputer die zu dem zentralen Computer gehörende Web-Adresse, bzw. die Web-Adresse der o.g. Homepage (oder einer entsprechenden anderen Datei), insbesondere als URL-(Universal Resource Locator-) Adresse, übermittelt. Die o.g. Schritte des Einschaltens, des Verbindens des Zielcomputers mit seinem zugehörigen Web-Host, und der Anwahl der Web-Adresse des zentralen Computers laufen vollautomatisch ab, getriggert vom Empfang des Rufsignals.

Der Zielcomputer sendet in Reaktion auf das Rufsignal des zentralen Computers ein weiteres Rufsignal an den zentralen Computer sendet, welcher in Reaktion auf das weitere Rufsignal die Verbindung zum Zielcomputer herstellt. Das weitere Rufsignal kann allgemein jedes beliebige Anforderungssignal an den zentralen Computer sein. Es wird vom Zielcomputer dadurch ein weiteres Rufsignal an den zentralen Computer gesendet, daß er die Telefonnummer eines dem zentralen Computer zugeordneten Telefonanschlusses wählt, d.h. die dem Telefonanschluß des zentralen Computers entsprechenden Telefonverbindungs-Wahlzeichen. Der zentrale Computer kann mit dem Zielcomputer verbunden werden, indem der zentrale Computer ein Telefonverbindungs-Beginnzeichen an den Zielcomputer übermittelt, d.h. indem beim zentralen Computer ein dem Abheben beim Fernsprechgerät entsprechender Vorgang stattfindet.

Auch ist es vorteilhaft möglich, daß der zentrale Computer in Reaktion auf das weitere Rufsignal eine Internetverbindung mit dem Zielcomputer herstellt.

Es ist außerdem vorteilhaft, wenn vor dem Auslösen des Verbindens des zentralen Computers mit dem Zielcomputer in Reaktion auf den Aufbau der Internetverbindung durch den zentralen Computer ein Paßwort vom entfernten Computer zum zentralen Computer übermittelt werden muß. Weiterhin ist es von Vorteil, wenn nach dem Übermitteln des Paßwortes für jedes Auslösen des Verbindens eine nur einmal verwendbare Transaktionsnummer vom entfernten Computer zum zentralen Computer übermittelt werden muß. Diese Transaktionsnummer ist eine zufällig generierte Ziffernkombination, welche z.B. vom zentralen Computer erzeugt und zum Anwender übermittelt wird, und jeweils nur für ein Verbinden einsetzbar ist. Dadurch wird die Sicherheit weiter erhöht.

Vorteilhaft muß vor dem Ändern von Daten auf dem Zielcomputer ein zweites Paßwort vom entfernten Computer zum Zielcomputer übermittelt werden. Besonders bevorzugt muß nach dem Übermitteln des zweiten Paßwortes eine nur einmal verwendbare Transaktionsnummer vom entfernten Computer zum Zielcomputer übermittelt werden.

Auch ist es vorteilhaft, wenn ausgewählte Dateien des Zielcomputers zum entfernten Computer übertragen werden. Besonders bevorzugt werden die ausgewählten Dateien vom Zielcomputer zum zentralen Computer übertragen, und dort gespeichert.

Die ausgewählten Dateien des Zielcomputers sind vorteilhaft über externe, insbesondere beim Zielcomputer angeordnete, Datenerfassungsmittel, insbesondere eine Kamera und/oder ein Mikrofon erfaßte Bild- und/oder Tondaten.

Auch ist von Vorteil, wenn ausgewählte Dateien des entfernten Computers zum Zielcomputer übertragen werden. Bevorzugt sind die ausgewählten Dateien des entfernten Computers über externe, insbesondere beim entfernten Computer angeordnete, Datenerfassungsmittel, insbesondere eine Kamera und/oder ein Mikrofon erfaßte Bild- und/oder Tondaten.

Vorteilhaft wird ein Datenabgleich zwischen dem Zielcomputer und dem entfernten Computer durchgeführt. Z.B. wird ein bestimmter Datensatz auf dem entfernten Computer mit einem diesem zugeordneten Datensatz auf dem Zielcomputer abgeglichen (oder umgekehrt). Nach dem Abgleich enthält dann der abzugleichende Datensatz auf dem entfernten Computer die exakt gleichen Daten wie der diesem zugeordnete Datensatz des Zielcomputers (oder umgekehrt).

Vorteilhaft werden Daten auf dem Zielcomputer in Reaktion auf von dem entfernten Computer empfangene Steuersignale geändert. Besonders bevorzugt werden die geänderten Daten bereits im Verlauf der Änderung zum entfernten Computer übertragen. Bevorzugt sind die Steuersignale über eine Tastatur und/oder eine Maus und/oder weitere Eingabegeräte des entfernten Computers aufgenommene Steuerbefehle sind.

Zur näheren Erläuterung der Erfindung werden im folgenden mehrere Ausführungsbeispiele beschrieben. Es zeigen:
**Figur 1** die erfindungsgemäße Vorrichtung in einem Kommunikationssystem zum Fernzugriff auf einen Zielcomputer;
**Figur 2** eine Vorrichtung in einem Kommunikationssystem zum Fernzugriff auf einen Zielcomputer, wobei die Verbindung über einen Internet-Service-Provider (ISP) erfolgt.
**Figur 3** die erfindungsgemäße Vorrichtung in einem Kommunikationssystem zum Fernzugriff auf einen Zielcomputer, wobei die Anwahl des entfernten Computers über eine Satellitenverbindung geschieht.

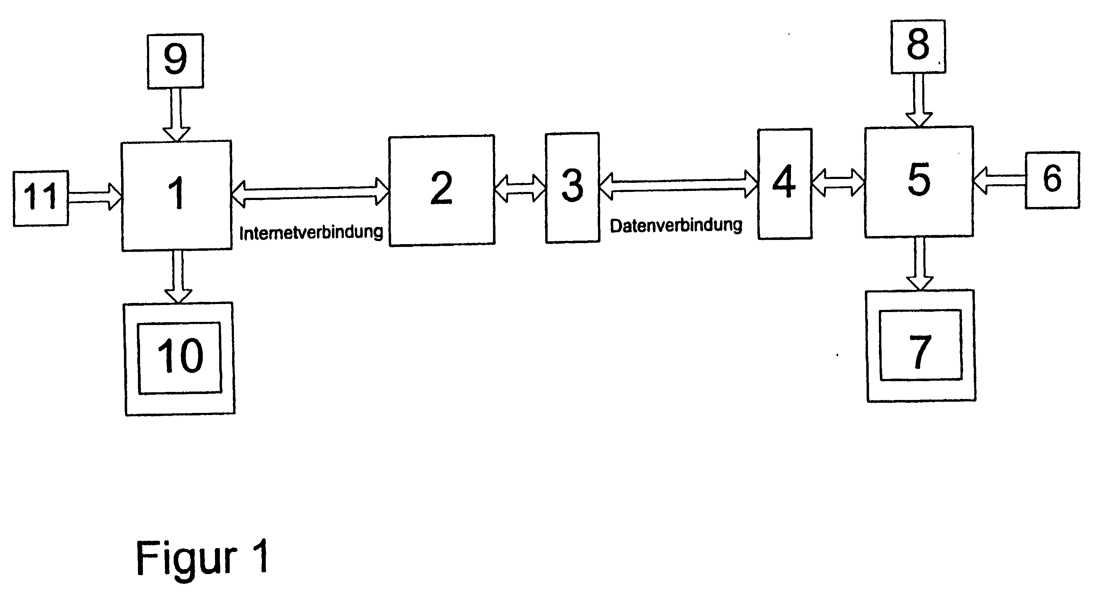

**Figur 1** stellt ein erstes Ausführungsbeispiel der Erfindung dar.

Block 1 symbolisiert einen entfernten Computer (1) welcher über die am entfernten Computer (1) dargestellte Internetseite eines zentralen Computers (2), über eine Internetverbindung direkt eine Verbindung mit dem zentralen Computer (2) aufbauen kann. Der zentrale Computer (2) kann über die am entfernten Computer (1) dargestellte Internetseite des zentralen Computers (2) Sicherheitskontrollen mittels einer Usernamen- und/oder Passwortabfrage vornehmen, um den Zugriff zu kontrollieren. Nachdem der Zugriff erteilt wurde, löst der mit einem Telefonnetz verbundene, zentrale Computer (2) über ein zentrales Modem (3) eine Telefonverbindung aus. Dies kann eine herkömmliche analoge oder digitale Telefonverbindung, eine Breitband-TV-Kabelverbindung, eine schnurlose TV- / Mobilfunkoder auch eine spezielle z.B. ADSL- oder Satellitenverbindung sein, und wählt die Telefonnummer des ebenfalls mit diesem Netz verbundenen Zielcomputers (5). Dieser kann nun die Verbindung direkt herstellen, indem er über ein geeignetes Modem (4) die vom zentralen Computer ausgelöste Telefonverbindung annimmt oder nach dem Eingang des Rufsignals vom zentralen Computer (2) seinerseits eine Telefonverbindung zum zentralen Computer (2) auslöst, indem er über das Modem (4) die Telefonnummer des zentralen Computers (2) wählt und dieser die Verbindung durch Annehmen des Rufsignals vom Zielcomputer (5) herstellt. Dabei ist es ausreichend, wenn der Zielcomputer (5) den zentralen Computer (2) anhand der mit dem Rufsignal mitübertragenden Call-ID, meist seiner Telefonnummer, identifiziert und daraufhin die Verbindung zum zentralen Computer (2) herstellt.

Nun werden alle Steuersignale der Eingabegeräte z.B. einer Maus (11) des entfernten Computers (1) sowie einer Tastatur (6) des entfernten Computers (1) über die Internetverbindung zum zentralen Computer (2) und von dort aus über die Telefonverbindung mittels des zentralen Modems (3) sowie des Modems (4) zum Zielcomputer (5) übertragen. Die auf einem Monitor (7) des Zielcomputers (5) dargestellten Bilddaten werden ständig, spätestens nach einer Änderung oder nach einem vorbestimmten Zeitintervall nach einer Änderung, oder nach einer vorbestimmten Anzahl von Änderungen, vom Zielcomputer (5) über das Modem (4) mittels der Telefonverbindung über das zentrale Modem (3) zum zentralen Computer (2) und schließlich zum entfernten Computer (1) übertragen. Auf der am entfernten Computer (1) dargestellten Internetseite werden die selben Daten dargestellt wie auf dem Monitor (7) des Zielcomputers (5).

Somit ist vom entfernten Computer (1) aus eine uneingeschränkte Steuerung des Zielcomputers (5) möglich.

D.h. beispielsweise, daß vom entfernten Computer (1) aus der auf dem Monitor (7) des Zielcomputer (5) dargestellte Mauspfeil durch bewegen der Maus des entfernten Computers (11) gesteuert werden kann. Die Bewegung des auf dem Monitor des Zielcomputers (7) dargestellten Mauspfeils bzw. die sich dadurch verändernden Daten, werden sofort nach Beginn der Mausbewegung übertragen. Das bedeutet, daß bereits nach der kleinsten Änderung der auf dem Bildschirm dargestellten Daten diese zum entfernten Computer (1) übertragen, und dort dargestellt werden. So ist eine vollumfängliche Steuerung des Zielcomputers (5) möglich, es kann beispielsweise ein Dokument im Zielcomputer (5) erstellt werden, welches an der Tastatur des entfernten Computers (1) eingegeben wird. Weiterhin ist es möglich, gezielt auf einzelne Dateien des Zielcomputers (5) zuzugreifen und diese zum entfernten Computer (1) zu übertragen. Dabei wird die Datei z.B. von der Festplatte des Zielcomputers (5) geladen, und die Daten der Datei mittels des Modems (4) über die Telefonverbindung und das zentrale Modem (3) zum zentralen Computer (2) übertragen. Dort werden die Daten entweder (zum späteren Abruf) gespeichert, oder über die Internetverbindung zum entfernten Computer (1) übertragen, und dort beispielsweise abgespeichert oder bearbeitet.

Die Daten der übertragenen Datei können auch Daten einer z.B. extern an den Zielcomputer (5) und/oder entfernten Computer (1) angeschlossenen Kamera und/oder eines Mikrofons sein; dadurch ist ein Auslösen einer Audio-/Videokonferenz durch das Verbinden des entfernten Computers (1) mit dem Zielcomputer (5) möglich. Außerdem beginnt nach der Herstellung der Verbindung zwischen zentralem Computer (2) und Zielcomputer (5) im zentralen Computer (2) eine Zeitdauerzähler (nicht dargestellt) zu laufen, bis die Verbindung wieder unterbrochen wird. Die Zeitdauerzählerdaten werden ebenfalls im zentralen Computer (2) gespeichert und gegebenenfalls zum entfernten Computer (1) übertragen, und dort dargestellt.

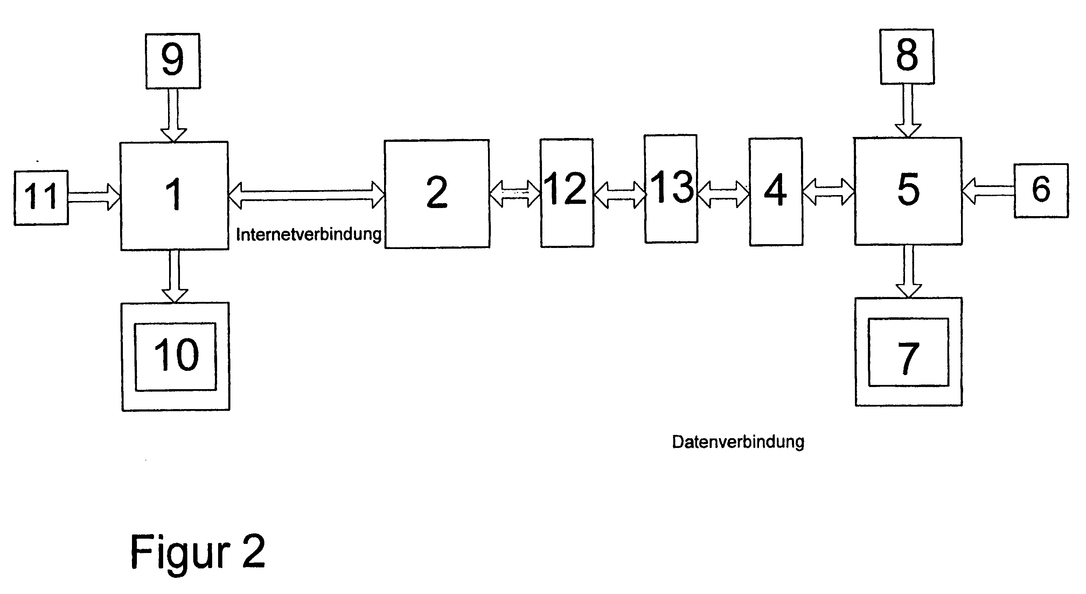

Gemäß **Figur 2** stellt der Zielcomputer (5) nach dem Eingang des Rufsignals vom zentralen Computer (2) über das Modem des Zielcomputers (4) eine Internetverbindung z.B. über einen Internet-Service-Provider (ISP) (12) zum zentralen Computer (2) her und meldet sich über die Internetverbindung am zentralen Computer (2) an.

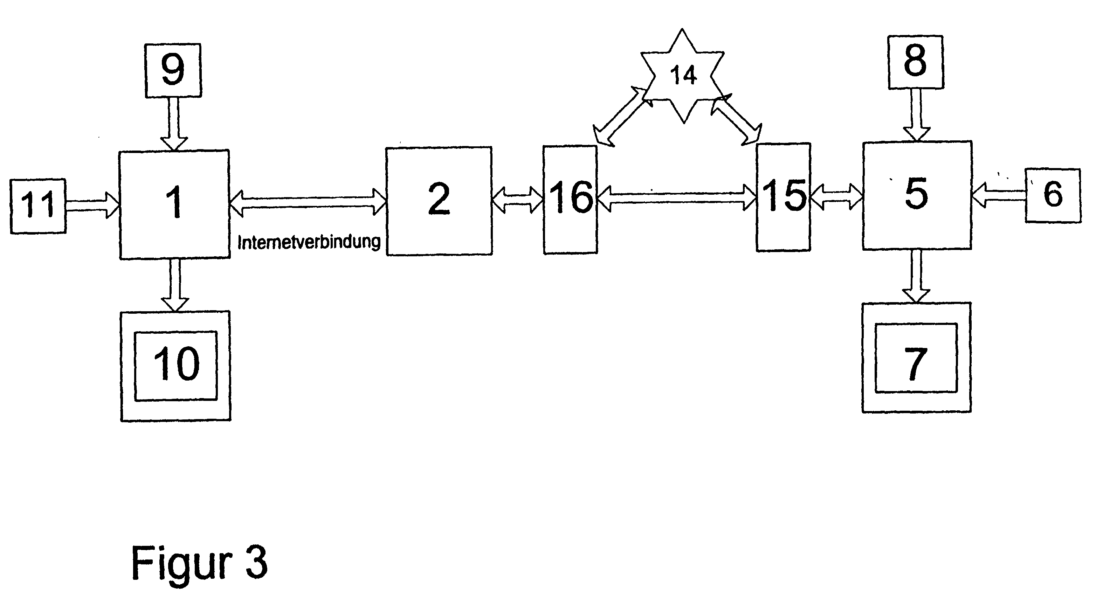

**Figur 3** stellt ein zusätzliches Ausführungsbeispiel der Erfindung dar. Dabei erfolgt die Datenübertragung zwischen dem zentralen Computer (2) und dem Zielcomputer (5) nicht wie in Figur 1 und 2 dargestellt über eine Verbindung über ein Modem (3, 4), sondern über eine Satellitenverbindung. Hierbei wird vom zentralen Computer (2) eine Verbindung zum Satellitenbetreiber (16) hergestellt. Dieser sendet die Daten an den Satelliten (14), der die Daten direkt an eine Satellitenempfangsvorrichtung (15) am Zielcomputer (5) überträgt. Die Übertragung der Daten vom Zielcomputer (5) zum zentralen Computer (2) kann entweder über den Satelliten (14) oder falls dieser nicht über einen Rückkanal verfügt über eine direkte Verbindung (z.B. eine Internetverbindung) zwischen dem Zielcomputer (5) und dem zentralen Computer (2) erfolgen.

## Patentansprüche

1. Verfahren zum Fernzugriff auf einen Zielcomputer (5), welches die Schritte aufweist:
a) Aufbauen einer Internetverbindung von einem entfernten Computer (1) zu einem zentralen Computer (2);
b) Auslösen eines Verbindens des zentralen Computers (2) mit dem Zielcomputer (5) in Reaktion auf den Aufbau der Internetverbindung, **dadurch gekennzeichnet, dass** beim Schritt b) der zentrale Computer (2) zum Auslösen des Verbindens ein Rufsignal an den Zielcomputer (5) sendet, und zwar durch Wählen der Telefonnummer des Zielcomputers; und wobei der Zielcomputer (5) in Reaktion auf das Rufsignal ein weiteres Rufsignal an den zentralen Computer (2) durch Wählen der Telefonnummer des zentralen Computers sendet, welcher in Reaktion auf das weitere Rufsignal die Verbindung zum Zielcomputer (5) herstellt, und zwar durch einen dem Abheben beim Fernsprechgerät entsprechenden Vorgang.

2. Verfahren gemäß Anspruch 1, wobei der Zielcomputer (5) in Reaktion auf das Rufsignal eingeschaltet wird.

3. Verfahren gemäß einem der vorhergehenden Ansprüche, wobei ausgewählte Dateien des Zielcomputers (5) zum entfernten Computer (1) übertragen werden.

4. Verfahren gemäß einem der vorhergehenden Ansprüche, welches außerdem die Schritte aufweist:
c) Ändern von Daten auf dem Zielcomputer (5) in Reaktion auf von dem entfernten Computer (1) empfangene Steuersignale;
d) Übertragen der geänderten Daten bereits im Verlauf der Änderung.

5. Verfahren gemäß Anspruch 4, wobei die Steuersignale über eine Tastatur und/oder eine Maus und/oder weitere Eingabegeräte des entfernten Computers (1) aufgenommene Steuerbefehle sind.

6. Verfahren gemäß einem der Ansprüche 3 bis 5, wobei die ausgewählten Dateien des Zielcomputers (5) über externe, beim Zielcomputer (5) angeordnete, Datenerfassungsmittel, und zwar eine Kamera oder ein Mikrofon erfaßte Bild- oder Tondaten sind.

7. Verfahren gemäß einem der vorhergehenden Ansprüche, wobei ausgewählte Dateien des entfernten Computers (1) zum Zielcomputer (5) übertragen werden.

8. Verfahren gemäß Anspruch 7, wobei die ausgewählten Dateien des entfernten Computers (1) über externe, beim entfernten Computer (1) angeordnete, Datenerfassungsmittel, und zwar eine Kamera oder ein Mikrofon erfasste Bild- oder Tondaten sind.

9. Verfahren gemäß einem der vorhergehenden Ansprüche, wobei ein Datenabgleich zwischen dem Zielcomputer (5) und dem entfernten Computer (1) durchgeführt wird.

10. Zentraler Computer (2) zum Fernzugriff auf einen Zielcomputer (5), wobei der zentrale Computer (2) aufweist:
a) eine Einrichtung zum Aufbauen einer Internet-Verbindung von dem zentralen Computer (2) zu einem entfernten Computer (1);
b) eine Einrichtung zum Auslösen eines Verbindens des zentralen Computers (2) mit dem Zielcomputer (5) in Reaktion auf den Aufbau der lntemet-Verbindung, **dadurch gekennzeichnet, dass** der zentrale Computer (2) so ausgebildet ist, dass er zum Auslösen des Verbindens ein Rufsignal an den Zielcomputer (5) sendet, und zwar durch Wählen der Telefonnummer des Zielcomputers; und
wobei der zentrale Computer (2) ferner ausgebildet ist, ein Rufsignal vom Zielcomputer (5) zu empfangen, das der Zielcomputer (5) in Reaktion auf das Rufsignal des zentralen Computers an den zentralen Computer (2) durch Wählen der Telefonnummer des zentralen Computers sendet, und wobei der zentrale Computer (2) so ausgebildet ist, dass er in Reaktion auf das weitere Rufsignal die Verbindung zum Zielcomputer (5) herstellt, und zwar durch einen dem Abheben beim Fernsprechgerät entsprechenden Vorgang.

## Claims

1. Method for remote access to a target computer (5) comprising:
(a) establishing an internet-connection from a remote-computer (1) to a central computer (2);
(b) triggering the connection of the central computer (2) with the target computer (5) in reaction to the establishment of the internet-connection, **characterized in that** in step (b) the central computer (2) for triggering sends a calling signal to the target computer (5) by dialing the telephone number of the target computer, and whereas the target computer (5) in reaction to the calling signal sends a further calling signal to the central computer (2) for dialing the telephone number of the central computer which in reaction to the further calling signal establishes the connection to the target computer (5) through a process which corresponds to the taking of a call at a telephone.

2. Method according to claim 1, whereas the target computer (5) is switched on in response to the calling signal.

3. Method according to one of the preceding claims, whereas selected files of the target computer (5) are transmitted to the remote computer (1).

4. Method according to one of the preceding claims, which further comprises the following steps:
(c) amending of data on the target computer (5) in reaction to controlling signals received from the remote computer (1);
(d) transmitting the amended data already during the amendment.

5. Method according to claim 4, whereas the controlling signals are controlling signals which are received through a keyboard and/or a mouse and/or further input devices of the remote computer (1).

6. Method according to one of claims 3 to 5, whereas the selected files of the target computer (5) are image or sound data which have been captured by data capturing means located at the target computer (5), namely through a camera or a microphone.

7. Method according to one of the preceding claims, whereas selected data of the remote computer (1) are transmitted to the target computer (5).

8. Method according to claim 7, whereas the selected files of the remote computer (1) are image data or sound data which are captured through data capturing means which are located at the remote computer (1), namely through a camera or a microphone.

9. Method according to one of the preceding claims, whereas a data adjustment between the target computer (5) and the remote computer (1) is carried out.

10. Central computer (2) for remote access to a target computer (5), whereas the central computer (2) comprises:
(a) means for establishing an internet-connection from the central computer (2) to a remote computer (1);
(b) means for triggering the connection of the central computer (2) with the target computer (5) in reaction to the establishment of the internet-connection, **characterized in that** the central computer (2) is adapted such that it sends a calling signal to the target computer (5) for triggering the connection through dialing the telephone number of the target computer; and
- whereas the central computer (2) is further adapted to receive a calling signal from the target computer (5) which the target computer (5) sends to the central computer (2) through dialing the telephone number of the central computer in reaction to the calling signal from the central computer, whereas the central computer (2) is further adapted such that it establishes the connection to the target computer (5) in reaction to the further calling signal through a procedure which corresponds to picking up the receiver at a telephone apparatus.

## Revendications

1. Procédé pour accéder à distance à un ordinateur de cible (5) comprenant les étapes consistant à:
a) établir une connexion internet à partir d'un ordinateur à distance (1) à un ordinateur central (2);
b) déclencher une connexion de l'ordinateur central (2) avec l'ordinateur de cible (5) en réaction à l'établissement de la connexion internet, **caractérisé en ce que** lors de l'étape b) l'ordinateur central (2) envoie un signal d'appel à l'ordinateur de cible (5), et ce en componsant le numéro de téléphone de l'ordinateur de cible; et l'ordinateur de cible (5) envoyant, en réaction au signal d'appel, un autre signal d'appel à l'ordinateur central (2) en composant le numéro de téléphone de l'ordinateur central, qui établit en réaction à l'autre signal d'appel une connexion avec l'ordinateur de cible (5), et ce par un procédé correspondant à décrocher l'écouteur d'un téléphone.

2. Procédé selon la revendication 1, l'ordinateur de cible (5) étant branché en réaction au signal d'appel.

3. Procédé selon une des revendications précédentes, des données sélectionnées de l'ordinateur de cible (5) étant transmises à l'ordinateur à distance (1).

4. Procédé selon une des revendications précédentes, comportant en outre les étapes consistant à:
c) modifier des données sur l'ordinateur de cible (5) en réaction aux signaux de contrôles reçus par l'ordinateur à distance (1),
d) transmettre les données modifiées déjà lors de leur modification.

5. Procédé selon la revendication 4, les signaux de contrôle étant des signaux de commande reçus par le biais d'un clavier et/ou d'une souris et/ou d'autres périphériques d'introduction de données de l'ordinateur à distance (1).

6. Procédé selon une des revendications 3 à 5, les fichiers sélectionnées de l'ordinateur de cible (5) étant des données d'images ou de son qui sont saisies par le biais de matériel de saisie de données externes, disposé à l'ordinateur de cible (5), à savoir d'une caméra ou d'un microphone.

7. Procédé selon une des revendications précédentes, des données sélectionnées de l'ordinateur à distance (1) étant transmises à l'ordinateur de cible (5).

8. Procédé selon la revendication 7, les données sélectionnées de l'ordinateur à distances (1) étant des données d'images ou de son qui sont saisies par le biais de matériel de saisie de données externes, disposés à l'ordinateur à distance (1), à savoir d'une caméra ou d'un microphone.

9. Procédé selon une des revendications précédentes, un alignement des données de l'ordinateur de cible (5) et de l'ordinateur à distance (1) étant réalisé.

10. Ordinateur central (2) pour accéder à distance à un ordinateur de cible (5), l'ordinateur central (2) comprenent
(a) moyens pour établir une connexion internet à partir de l'ordinateur central (2) avec un ordinateur à distance (1);
(b) moyens pour déclencher une connexion de l'ordinateur (2) à l'ordinateur de distance (5) en réaction à l'établissement de la connexion internet, **caractérisé en ce que** l'ordinateur central (2) est conçu de sorte qu'il envoie un signal d'appel à l'ordinateur de cible (5) pour déclencher la connexion, et ce en composant le numéro de téléphone de l'ordinateur; et
- l'ordinateur central (2) étant en outre conçu à recevoir un signal d'appel à partir de l'ordinateur de cible (5), que l'ordinateur de cible (5) envoie à l'ordinateur centrale (2) en réaction au signal d'appel de l'ordinateur central en composant le numéro de téléphone de l'ordinateur central, et l'ordinateur central (2) étant conçu en outre de sorte qu'il établisse la connexion avec l'ordinateur de cible (5) en réaction à l'autre signal d'appel, et ce par un autre procédé correspondant à décrocher l'écouteur du téléphone.
